(19) **Europäisches Patentamt**
**European Patent Office**
**Office européen des brevets**

(11) **EP 1 310 314 B1**

(12) **FASCICULE DE BREVET EUROPEEN**

(45) Date de publication et mention
de la délivrance du brevet:
**16.09.2009 Bulletin 2009/38**

(51) Int Cl.:
**B23C 3/34** *(2006.01)*     **B23Q 11/00** *(2006.01)*
**B23C 7/00** *(2006.01)*     **B23C 3/02** *(2006.01)*

(21) Numéro de dépôt: **02292750.3**

(22) Date de dépôt: **04.11.2002**

(54) **Outil, machine et procédé de percage orbital d'un orifice**

Werkzeug, Maschine und Verfahren zum Bohren auf spiralförmiger Bahn

Tool, Machine and Procedure for the Orbital Drilling of a Hole

(84) Etats contractants désignés:
**DE GB**

(30) Priorité: **13.11.2001 FR 0114675**

(43) Date de publication de la demande:
**14.05.2003 Bulletin 2003/20**

(73) Titulaire: **Cooper Power Tools SAS**
**77330 Ozoir la Ferriere (FR)**

(72) Inventeurs:
• **Debat, Claude**
**31490 Brax (FR)**

• **Bureller, Michel**
**92160 Antony (FR)**

(74) Mandataire: **Jacobson, Claude et al**
**Cabinet Lavoix**
**2, place d'Estienne d'Orves**
**75441 Paris Cedex 09 (FR)**

(56) Documents cités:
**WO-A-00/21705**     **WO-A-01/15870**
**DE-A- 2 105 578**     **DE-C- 939 063**
**DE-U- 29 816 665**     **GB-A- 1 349 060**
**US-A- 4 813 828**

Printed by Jouve, 75001 PARIS (FR)

**Description**

La présente invention concerne un outil de perçage d'un orifice selon le préambule de la revendication 1.

Un tel outil est décrit dans WO-00/21 705.

L'invention s'applique en particulier aux outils de perçage utilisés dans la construction aéronautique.

Un outil du type précité met en oeuvre un procédé de perçage dit « orbital », par référence au mouvement de la fraise par rapport au premier axe de rotation.

Un tel outil permet de diminuer, par rapport à un outil classique où la tête de coupe est un foret coaxial à l'orifice à percer, le couple d'entraînement en rotation de la tête de coupe et l'effort axial de pénétration de tête de coupe dans la pièce à percer.

Cependant, dans un outil du type précité, la fraise s'étend généralement axialement depuis l'extérieur de la pièce à percer jusqu'à l'intérieur de l'orifice. Par ailleurs, le support de fraise a une étendue radiale, par rapport au premier axe de rotation, supérieure au rayon de l'orifice percé dans la pièce. Au cours du perçage, la fraise est donc en porte-à-faux et est soumise à des efforts de flexion importants, qui peuvent notamment nuire à la forme et à la précision des orifices obtenus.

Ainsi, les outils du type précité sont mal adaptés pour réaliser des orifices de rapport longueur/diamètre important.

Un but de l'invention est de résoudre ce problème en fournissant un outil du type précité qui permette de réaliser des orifices de rapport longueur/diamètre important.

A cet effet, l'invention a pour objet un outil selon la revendication 1.

Selon des modes particuliers de réalisation, l'outil peut comprendre l'une ou plusieurs des caractéristiques des revendications dépendantes 2 à 8.

L'invention a en outre pour objet une machine de perçage d'un orifice, selon la revendication 9.

Selon une variante, la machine présente la caractéristique de la revendication 10.

L'invention a en outre pour objet un procédé de perçage d'un orifice selon la revendication 11.

Selon une variante, le procédé comprend l'étape de la revendication 12.

L'invention sera mieux comprise à la lecture de la description qui va suivre, donnée uniquement à titre d'exemple, et faite en se référant aux dessins annexés, sur lesquels :

- la figure 1 est une vue schématique, latérale et partiellement en coupe d'une machine selon un premier mode de réalisation de l'invention,
- la figure 2 est une vue en bout de la fraise et du support de fraise de la machine de la figure 1 prise suivant la flèche II,
- la figure 3 est une vue analogue à la figure 1, illustrant le perçage d'une pièce par la machine des figures 1 et 2, et
- la figure 4 est une vue analogue à la figure 1 illustrant une variante de la machine de la figure 1.

Dans tout ce qui suit, les termes « avant » et « arrière » s'entendent par rapport au sens de perçage d'un orifice dans une pièce, c'est à dire de l'extérieur vers l'intérieur de l'orifice.

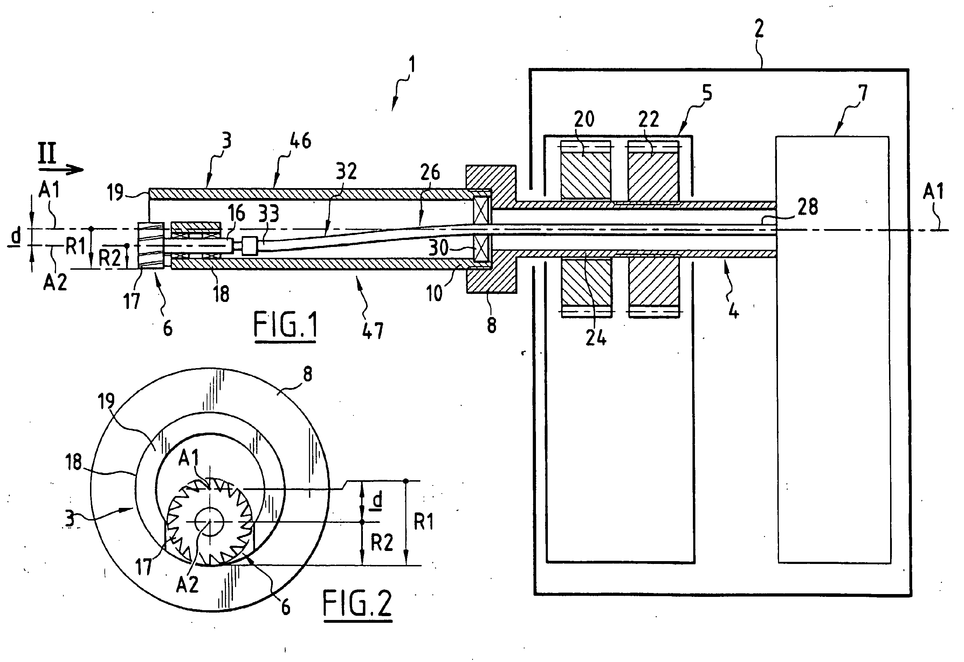

La figure 1 illustre schématiquement une machine de perçage 1 pour la mise en oeuvre d'un procédé orbital de perçage.

Cette machine 1 comprend principalement :

- un carter 2,
- un support 3 de fraise monté de manière amovible sur une broche 4,
- des moyens 5 d'entraînement du support 3, ces moyens étant logés dans le carter 2,
- une fraise 6 montée sur le support 3, et
- des moyens 7 d'entraînement de la fraise 6, ces moyens étant logés dans le carter 2.

Le support 3 et la broche 4 s'étendent le long d'un premier axe A1 central et commun. La broche 4 fait saillie hors du carter 2 par son extrémité avant ou distale 8, le reste de la broche étant reçu dans le carter 2.

Le support 3 est monté par son extrémité arrière ou proximale 10 à l'extrémité avant ou distale 8 de la broche 4. Le support 3 prolonge donc la broche 4 vers l'avant.

Le montage du support 3 sur la broche 4 est assuré par exemple par vissage de l'extrémité arrière 10 sur l'extrémité avant 8, éventuellement à l'aide d'une pièce auxiliaire.

Le support 3 comprend un tube de section circulaire centrée sur le premier axe A1 et de rayon extérieur R1, comme illustré par les figures 1 et 2.

La fraise 6 comprend une queue arrière de montage 16 et une partie active avant 17 munie de dents.

La fraise 6 est montée par l'intermédiaire de sa queue arrière 16 à l'extrémité avant libre 18 du support 3 d'une part pour pouvoir tourner autour de l'axe central A2 de la fraise 6 par rapport au support 3, et d'autre part pour être liée en translation axialement au support 3. On notera que la fraise 6 est montée de manière libérable sur le support 3 pour permettre le remplacement de la fraise 6.

La partie active 17 de la fraise 6 fait saillie axialement au-delà de la tranche avant 19 du support 3.

L'axe central A2 de la fraise 6 est parallèle à l'axe A1 et espacé radialement de celui-ci d'une distance d'espacement ou d'excentration $\underline{d}$ non nulle.

Comme illustré plus particulièrement par la figure 2, la fraise 6 possède, dans sa partie active 17, un rayon extérieur de coupe R2 par rapport à l'axe A2 tel que :

$$R1 \cong \underline{d} + R2$$

R1 est en fait très légèrement inférieur à $\underline{d}$ + R2, d'un jeu du type "glissant juste" par exemple de l'ordre de quelques microns ou dizaines dé microns pour permettre le fonctionnement décrit ultérieurement.

R1 est donc nettement supérieur à R2.

Les moyens 5 d'entraînement comprennent un moteur (non-représenté), par exemple pneumatique, et un train d'engrenages reliant ce moteur à la broche 4, et dont seuls deux pignons 20 et 22 ont été représentés sur la figure 1.

Le train d'engrenages forme un mécanisme classique dit « à avance mécanique » en français ou « positive feed drill » en anglais. Ce mécanisme permet de :

- entraîner la broche 4, et donc le support 3 et la fraise 6, en translation axiale par rapport au carter 2 vers l'avant et vers l'arrière, et
- entraîner la broche 4, et donc le support 3 et la fraise 6, en rotation par rapport au carter 2 autour du premier axe de rotation A1.

De manière classique, ces mouvements sont obtenus par rotation des pignons 20 et 22 à des vitesses différentes, le pignon 20 étant par exemple solidaire en rotation de la broche 4 et mobile en translation le long de l'axe A1 par rapport à celle-ci, et le pignon 22 étant vissé sur un tronçon intermédiaire fileté 24 de la broche 4.

La queue 16 de la fraise 6 est reliée aux moyens 7 d'entraînement par l'intermédiaire d'une tige 26.

Un tronçon arrière 28 de cette tige 26 s'étend depuis les moyens 7 dans la broche 4 jusqu'à un roulement 30 disposé dans l'extrémité arrière 10 du support 3.

Ce tronçon arrière 28 est sensiblement rectiligne et centré sur l'axe A1. Le tronçon restant 32 de la tige 26 s'étend dans le support 3. Ce tronçon avant 32 est fléchi radialement vers l'extérieur jusqu'à l'axe A2 pour que son extrémité avant 33 soit reliée à la queue arrière 16 de la fraise 6. L'extrémité avant 33 et la queue 16 de la fraise 6 sont liées en rotation autour de l'axe A2.

Les moyens 7 d'entraînement comprennent un moteur, par exemple pneumatique, et un train d'engrenages le reliant à l'extrémité arrière de la tige 26 pour entraîner en rotation la tige 26 le long de sa ligne directrice qui est confondue, pour le tronçon arrière 28, avec le premier axe de rotation A1, et pour l'extrémité avant 33 du tronçon avant 32 avec l'axe de rotation A2.

Ainsi, les moyens 7 d'entraînement n'ont qu'à produire un mouvement de rotation coaxial à celui de la broche 4 pour entraîner en rotation la fraise 6 autour de son axe central A2.

Les moyens 7 d'entraînement sont liés à l'extrémité arrière de la broche 4 pour la suivre au cours de ses translations axiales par rapport au carter 2.

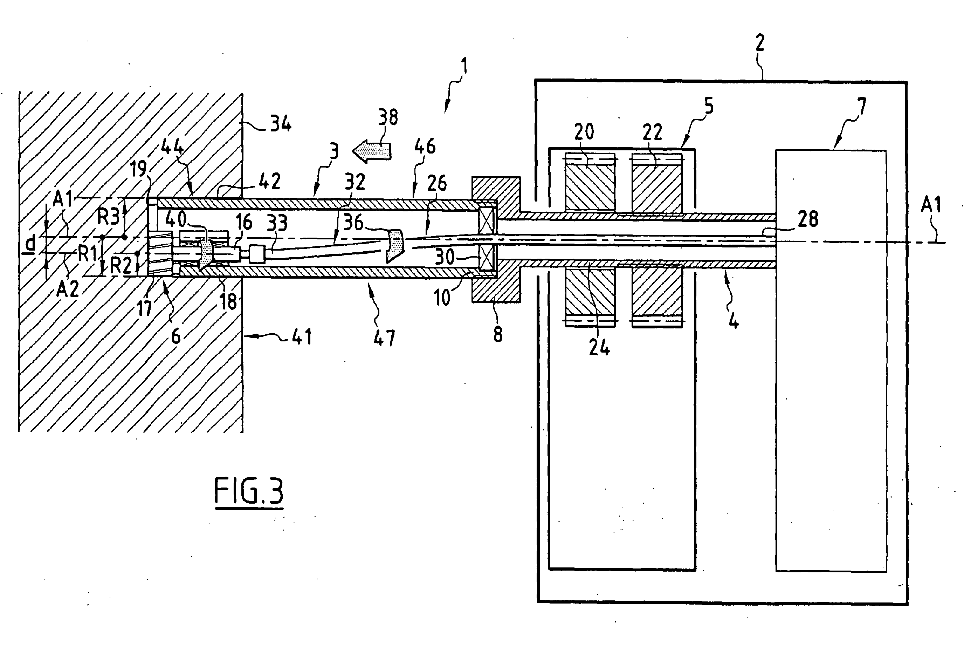

Comme illustré par la figure 3, pour percer un orifice dans une pièce 34, on déclenche le fonctionnement des moyens 5 et 7 d'entraînement pour provoquer :

- la rotation du support 3 autour de l'axe A1 comme matérialisé par la flèche 36, et son avance axiale comme matérialisé par la flèche 38, et
- la rotation de la fraise 6 autour de son axe central A2 comme illustré par la flèche 40.

La partie active 17 de la fraise 6 est alors appliquée axialement vers l'avant contre la pièce 34. Les axes A1 et A2 sont sensiblement orthogonaux à la surface extérieure 41 de la pièce 42 au travers de laquelle le perçage va être initié.

La fraise 6 enlève ainsi tangentiellement des copeaux de la pièce 34 pour y percer un orifice 42 d'axe A1 et de rayon R3 égal à la somme $\underline{d}$ +R2. Cet alésage est donc cylindrique et de section constante le long de l'axe A1.

Lorsque le perçage se poursuit, et comme illustré par la figure 3, l'extrémité avant 18 du support 3 pénètre au fur et à mesure dans l'orifice 42 et prend appui radialement sur la paroi latérale 44 de l'orifice 42. Cette pénétration et cet appui sont permis grâce au fait que les rayons R1 et R3 sont égaux, au jeu fonctionnel nécessaire précité près.

Ainsi, la surface extérieure 46 du support 3 forme surface d'appui sur la paroi 44 de l'orifice 42 en permettant ainsi au support 3 de guider et de centrer la fraise 6 dans l'orifice 42. Ce guidage permet d'atteindre une précision satisfaisante pour le perçage de l'orifice 42.

Une fois le perçage de l'orifice 42 achevé, la fraise 6 et le support 3 sont reculés axialement pour les retirer de l'orifice 42.

Le support 3 étant adapté pour pénétrer dans l'orifice 42 lors de son perçage, la longueur de la fraise 6 est réduite par rapport à celles des machines classiques mettant en oeuvre un procédé orbital de perçage. Ainsi, la fraise 6 est moins susceptible de fléchir et la machine 1 permet de percer des orifices 42 de rapport diamètre/longueur important.

On notera que pour atteindre ce résultat, le support 3 ne doit pas servir nécessairement de guide à la fraise 6 dans l'orifice 42. Ainsi, le rayon extérieur R1 du support 3 peut être nettement inférieur au rayon R3 de l'orifice 42.

On notera également que le support 3 n'a pas nécessairement une forme de révolution par rapport à l'axe A1. Ainsi, le support 3 peut comprendre plusieurs surfaces 46 d'appui sur la paroi 44 de l'orifice 42, par exemple au moins trois surfaces d'appui en arcs de cercle centrés sur l'axe A1 et de rayon R1.

On notera également que la structure de ces moyens 5 et 7 peut être particulièrement simple et économique car :

- la fraise 6 est montée rotative sur le support 3 qui n'a donc pas à être entraîné en rotation autour de l'axe A2, et
- les moyens 5 et 7 d'entraînement n'ont à produire des mouvements de rotation que coaxiaux et non pas excentrés, grâce à la tige 26 qui forme organe intermédiaire de transmission.

Cette dernière caractéristique n'est cependant pas indispensable pour avoir des moyens 5 et 7 d'entraînement simples et économiques.

Ainsi, dans une variante non représentée, les moyens 7 d'entraînement peuvent comprendre un moteur non plus logé dans le carter 2, mais prévu à l'extrémité avant 18 du support 3 et alimenté, par exemple pneumatiquement, par une ligne remplaçant la tige 26.

Dans une autre variante, les moyens 5 d'entraînement n'assurent pas l'avance de la fraise 6, ce mouvement étant obtenu par déplacement vers l'avant de l'ensemble de la machine 1, assuré par exemple par un opérateur si la machine est portative, c'est-à-dire si elle pèse moins de 15 kg.

En tout état de cause, les principes ci-dessus peuvent s'appliquer à des machines portatives ou non.

On notera enfin que la fraise 6 et le support 3 forment un outil de perçage 47 qui peut être monté de manière amovible à l'avant de broches porte-outils 4 de machines de perçage existantes. Cet outil de perçage 47 peut donc être commercialisé séparément.

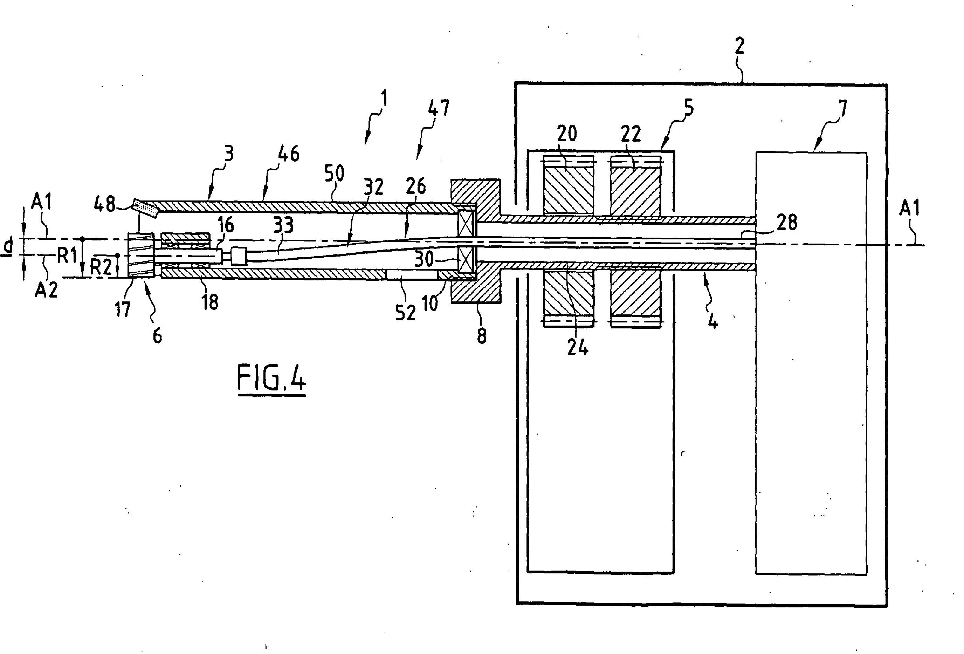

La figure 4 illustre une variante de la machine de la figure 1 qui s'en distingue par ce qui suit.

L'extrémité avant 18 du support 3 est munie d'un grain 48 de finition de l'orifice 42. Ce grain 48 est par exemple prévu sur la tranche avant 19 du support 3, à l'opposé de la fraise 6 par rapport à l'axe A1. En outre, le support 3 est percé latéralement d'une ouverture 52 d'évacuation de copeaux. Cette ouverture 52 est ménagée à l'extrémité arrière 10 du support 3.

Du fait de la présence du grain 48 qui finit l'usinage produit par la fraise 6, la somme $\underline{d}$ + R2 est inférieure de 0,1 ou 0,2mm par rapport à R1, pour assurer que R1 reste sensiblement égal à R3 et donc que la surface radialement extérieure 46 du support 3 vienne s'appuyer sur la paroi 44 de l'orifice 42.

Ici encore, l'extrémité avant 18 du support 3 pénètre dans l'orifice 42 au cours du perçage, ce qui permet de réaliser des orifices 42 de rapport longueur/diamètre élevé.

En outre, des moyens d'aspiration peuvent être raccordés à l'ouverture 52 pour évacuer les copeaux produits au cours du perçage.

L'évacuation des copeaux par l'intérieur du support 3 limite la détérioration, par frottement avec les copeaux, de la paroi 44 de l'orifice 42 réalisé.

**Revendications**

**1.** Outil (47) de perçage d'un orifice (42) dans une pièce (34), du type comprenant :

- un support (3) de fraise destiné à être entraîné en rotation autour d'un premier axe de rotation (A1) destiné à être confondu avec l'axe de l'orifice (42),
- une fraise (6) montée rotative sur le support de fraise pour percer l'orifice (42) en appliquant la fraise (6) axialement vers l'avant par poussée contre la pièce (34), un axe central (A2) de la fraise (6) formant un deuxième axe de rotation parallèle au premier axe de rotation et espacé de celui-ci d'une distance d'espacement ($\underline{d}$) non nulle, la fraise (6) étant destinée à être entraînée en rotation autour du deuxième axe de rotation (A2) par rapport au support de fraise (3) pour percer l'orifice,

**caractérisé en ce qu'**au moins un tronçon avant (18) du support de fraise (3) a, par rapport au premier axe de rotation (A1), une étendue radiale maximale inférieure ou égale au rayon (R3) de l'orifice (42) pour permettre la pénétration du tronçon avant (18) dans l'orifice (42) lors du perçage.

2. Outil selon la revendication 1, dans lequel l'étendue radiale maximale (R1) est sensiblement égale au rayon (R3) de l'orifice (42) de sorte que le tronçon avant (18) possède au moins une surface d'appui (46) sur la paroi (44) de l'orifice (42) pour guider la fraise (6) au cours du perçage.

3. Outil selon la revendication 2, dans lequel la ou chaque surface d'appui (46) du support de fraise a un contour extérieur circulaire ou en arc de cercle centré sur le premier axe de rotation (A1) et de rayon sensiblement égal au rayon (R3) de l'orifice (42).

4. Outil selon l'une des revendications précédentes, dans lequel le support (3) de fraise comprend un tube.

5. Outil selon l'une des revendications précédentes, l'outil comprenant des moyens (52) d'évacuation de copeaux formés par la fraise (6).

6. Outil selon les revendications 4 et 5 prises ensemble, dans lequel les moyens d'évacuation des copeaux comprennent une ouverture (52) traversant radialement le tube.

7. Outil selon l'une des revendications précédentes, l'outil comprenant un organe intermédiaire (26) de transmission d'un mouvement de rotation à la fraise (6), et dans lequel au moins un tronçon (28) de l'organe intermédiaire (26) est d'une part centré sur le premier axe de rotation (A1) et d'autre part rotatif autour du premier axe de rotation.

8. Outil selon l'une des revendications précédentes, dans lequel le support (3) de fraise est centré sur le premier axe de rotation (A1).

9. Machine (1) de perçage d'un orifice (42), **caractérisée en ce qu'**elle comprend :

   - un outil de perçage (47) selon l'une des revendications précédentes,
   - des moyens motorisés (5, 7) d'entraînement du support (3) de fraise en rotation autour du premier axe de rotation (A1) et de la fraise en rotation autour du deuxième axe de rotation (A2).

10. Machine selon la revendication 9, la machine comprenant une broche (4) sur laquelle le support (3) de fraise est monté de manière amovible, la broche (4) pouvant être entraînée en rotation autour du premier axe de rotation (A1) par les moyens (5) d'entraînement.

11. Procédé de perçage d'un orifice (42) dans une pièce (34), **caractérisé en ce qu'**il comprend les étapes de :

   - entraîner le support (3) de fraise d'un outil de perçage (47) selon l'une des revendications 1 à 8 en rotation autour du premier axe de rotation (A1),
   - entraîner la fraise (6) en rotation autour du deuxième axe de rotation (A2)
   - appliquer axialement vers l'avant par poussée la fraise (6) contre la pièce (34) pour y percer l'orifice (42), et
   - faire pénétrer au moins le tronçon avant (18) du support de fraise dans l'orifice (42) au fur et à mesure de son perçage.

12. Procédé selon la revendication 11, le procédé comprenant l'étape de guider la fraise (6) dans l'orifice (42) en appuyant radialement le support (3) de fraise contre la paroi (44) de l'orifice (42) au fur et à mesure de son perçage.

**Claims**

1. Tool (47) for boring a hole (42) in a workpiece (34), of a type comprising:

   - a support (3) for a milling cutter, which support is arranged to be driven in rotation about a first axis of rotation (A1) arranged to be coincident with the axis of the hole (42),
   - a milling cutter (6) rotatably mounted on the milling cutter support for boring the hole (42) by applying the milling cutter (6) in an axially forwards direction by pushing it against the workpiece (34), the central axis (A2) of the milling cutter (6) forming a second axis of rotation parallel to the first axis of rotation and spaced apart from the latter by a spacing distance (d) which is not zero, the milling cutter (6) being arranged to be driven in rotation about the second axis of rotation (A2) relative to the milling cutter support (3) for boring the hole,

**characterised in that** at least a front region (18) of the milling cutter support (3) has, relative to the first axis of rotation (A1), a maximum radial extent less than or equal to the radius (R3) of the hole (42) so as to allow the front region (18) to enter the hole (42) during the boring.

2. Tool according to claim 1, wherein the maximum radial extent (R1) is substantially equal to the radius (R3) of the hole (42) so that the front region (18) has at least one surface of abutment (46) against the wall (44) of the hole (42) for guiding the milling cutter (6) during the boring.

3. Tool according to claim 2, wherein the or each abutment surface (46) of the milling cutter support has an external contour which is circular or in the shape of an arc of a circle centred on the first axis of rotation (A1) and of a radius substantially equal to the radius (R3) of the hole (42).

4. Tool according to one of the preceding claims, wherein the milling cutter support (3) comprises a tube.

5. Tool according to one of the preceding claims, the tool comprising means (52) for removal of chips formed by the milling cutter (6).

6. Tool according to claims 4 and 5 taken together, wherein the chip removal means comprise an opening (52) passing through the tube radially.

7. Tool according to one of the preceding claims, the tool comprising an intermediate element (26) for transmission of a rotary movement to the milling cutter (6), and wherein at least one region (28) of the intermediate element (26) is, on the one hand, centred on the first axis of rotation (A1) and, on the other hand, rotatable about the first axis of rotation.

8. Tool according to one of the preceding claims, wherein the milling cutter support (3) is centred on the first axis of rotation (A1).

9. Machine (1) for boring a hole (42), **characterised in that** it comprises:

   - a boring tool (47) according to one of the preceding claims,
   - motorised means (5, 7) for driving the milling cutter support (3) in rotation about the first axis of rotation (A1) and the milling cutter in rotation about the second axis of rotation (A2).

10. Machine according to claim 9, the machine comprising a shaft (4) on which the milling cutter support (3) is removably mounted, the shaft (4) being arranged to be driven in rotation about the first axis of rotation (A1) by the driving means (5).

11. Method of boring a hole (42) in a workpiece (34), **characterised in that** it includes the steps of:

   - driving the milling cutter support (3) of a boring tool (47) according to one of claims 1 to 8 in rotation about the first axis of rotation (A1),
   - driving the milling cutter (6) in rotation about the second axis of rotation (A2),
   - applying the milling cutter (6), by pushing it in an axially forwards direction, against the workpiece (34) in order to bore the hole (42) therein, and
   - causing at least the front region (18) of the milling cutter support to enter the hole (42) as the latter is being bored.

12. Method according to claim 11, the method including the step of guiding the milling cutter (6) in the hole (42) by causing the milling cutter support (3) to abut the wall (44) of the hole (42) radially as the latter is being bored.

**Patentansprüche**

1. Werkzeug (47) zum Einarbeiten eines Loches (42) in einem Werkstück (34), von dem Typ, der folgendes aufweist:

- einen Träger (3) für einen Fräser, der dazu vorgesehen ist, um eine erste Drehachse (A1) drehend angetrieben zu werden, welche derart vorgesehen ist, daß sie mit der Achse des Loches (42) zusammenfällt,
- einen Fräser (6), der drehbar an dem Träger für einen Fräser montiert ist, um das Loch (42) einzuarbeiten, indem der Fräser (6) axial nach vorn gegen das Werkstück (34) angedrückt wird, wobei eine Mittelachse (A2) des Fräsers (6) eine zweite Drehachse bildet, die zur ersten Drehachse parallel und von dieser um eine Abstandsstrecke (d) beabstandet ist, die nicht Null ist, wobei der Fräser (6) dazu vorgesehen ist, relativ zum Träger (3) für einen Fräser um die zweite Drehachse (A2) drehend angetrieben zu werden, um das Loch einzuarbeitem,

**dadurch gekennzeichnet,**

**daß** zumindest ein vorderes Teilstück (18) des Trägers (3) für einen Fräser, bezogen auf die erste Drehachse (A1), eine maximale radiale Erstreckung aufweist, die kleiner als der oder gleich dem Radius (R3) des Loches (42) ist, um das Eindringen des vorderen Teilstücks (18) in das Loch (42) während des Einarbeitens zu ermöglichen.

2. Werkzeug nach Anspruch 1,
wobei die maximale radiale Erstreckung (R1) im wesentlichen gleich dem Radius (R3) des Loches (42) ist, so daß das vordere Teilstück (18) mindestens eine Abstützfläche (46) an der Wandung (44) des Loches (42) besitzt, um den Fräser (6) im Verlauf des Einarbeitens zu führten.

3. Werkzeug nach Anspruch 2,
wobei die bzw. jede Auflagefläche (46) des Trägers für einen Fräser eine kreisförmige- oder kreisbogenförmige äußere Kontur aufweist, die auf der ersten Drehachse (A1) zentriert ist und deren Radius im wesentlichen gleich dem Radius (R3) des Loches (42) ist.

4. Werkzeug nach einem der vorherigen Ansprüche,
wobei der Träger (3) für einen Fräser ein Rohr aufweist.

5. Werkzeug nach einem der vorherigen Ansprüche,
wobei das Werkzeug eine Einrichtung (52) zum Abführen von durch den Fräser (6) erzeugten Spänen aufweist.

6. Werkzeug nach den Ansprüchen 4 und 5 in Kombination,
wobei die Einrichtung zum Abführen der Späne eine Öffnung (52) aufweist, welche das Rohr radial durchsetzt.

7. Werkzeug nach einem der vorherigen Ansprüche,
wobei das Werkzeug ein Zwischenorgan (26) zum Übertragen einer Drehbewegung auf den Fräser (6) aufweist und wobei zumindest ein Teilstück (28) des Zwischenorgans (26) einerseits auf der ersten Drehachse (A1) zentriert ist und andererseits um die erste Drehachse drehbar ist.

8. Werkzeug nach einem der vorherigen Ansprüche,
wobei der Träger (3) für einen Fräser auf der ersten Drehachse (A1) zentriert ist.

9. Maschine (1) zum Einarbeiten eines Loches (42),
**dadurch gekennzeichnet,**
**daß** sie folgendes aufweist:

- ein Werkzeug (47) nach einem der vorherigen Ansprüche,
- motorisierte Antriebseinrichtungen (5, 7) zum drehenden Antreiben des Trägers (3) für einen Fräser um die erste Drehachse (A1) bzw. zum drehenden Antreiben des Fräsers um die zweite Drehachse (A2).

10. Maschine nach Anspruch 9,
wobei die Maschine eine Spindel (4) aufweist, an welcher der Träger (3) für einen Fräser auf abnehmbare Weise montiert ist, wobei die Spindel (4) von der Antriebseinrichtung (5) um die erste Drehachse (A1) drehend angetrieben werden kann.

11. Verfahren zum Einarbeiten eines Loches (42) in einem Werkstück (34),
**dadurch gekennzeichnet,**
**daß** es die folgenden Schritte aufweist:

- drehendes Antreiben des Trägers (3) für einen Fräser eines Werkzeugs (47) nach einem der Ansprüche 1 bis 8 um die erste Drehachse (A1),

- drehendes Antreiben des Fräsers (6) um die zweite Drehachse (A2),

- axiales Andrücken des Fräsers (6) nach vorn gegen das Werkstück (34), um in diesem das Loch (42) einzuarbeiten, und

- Eindringenlassen zumindest des vorderen Teilstücks (18) des Trägers für einen Fräser in das Loch (42) entsprechend dem Fortschritt des Einarbeitungsvorganges.

12. Verfahren nach Anspruch 11,
wobei das Verfahren den Schritt des Führens des Fräseres (6) in dem Loch (42) durch radiales Abstützen des Trägers (3) für einen Fräser gegen die Wandung (44) des Loches (42) entsprechend dem Fortschritt des Einarbeitungsvorganges aufweist.

II →

A1

d

R1

R2

A2

19

3

46

32

26

16 33

17

6

18

47

**FIG.1**

30

10

8

1

20

22

5

24

7

2

28

4

A1

**FIG.2**

19

18

3

A1

d

R1

R2

17

A2

8

6

9

EP 1 310 314 B1

FIG.3

FIG.4

EP 1 310 314 B1

**EP 1 310 314 B1**

## RÉFÉRENCES CITÉES DANS LA DESCRIPTION

**Documents brevets cités dans la description**

- WO 0021705 A